Europäisches Patentamt

European Patent Office

Office européen des brevets

(11) Veröffentlichungsnummer: **0 017 663**
**B1**

(12) **EUROPÄISCHE PATENTSCHRIFT**

(45) Veröffentlichungstag der Patentschrift: **09.01.85**

(51) Int. Cl.⁴: **F 16 K 27/02**

(21) Anmeldenummer: **79104534.7**

(22) Anmeldetag: **16.11.79**

(54) **Verfahren zum Herstellen eines einteiligen Ventilgehäuses.**

(30) Priorität: **24.04.79 DE 2916430**

(43) Veröffentlichungstag der Anmeldung:
**29.10.80 Patentblatt 80/22**

(45) Bekanntmachung des Hinweises auf die
Patenterteilung:
**09.01.85 Patentblatt 85/02**

(84) Benannte Vertragsstaaten:
**DE FR GB IT SE**

(56) Entgegenhaltungen:
**AT-B- 145 719**
**DE-B-1 042 998**
**DE-B-1 076 458**
**GB-A- 663 620**

(73) Patentinhaber: **Deutsche Babcock
Aktiengesellschaft
Duisburger Strasse 375
D-4200 Oberhausen 1 (DE)**

(72) Erfinder: **Hülsermann, Karl-Heinz
Alsenstrasse 29
D-4200 Oberhausen (DE)**
Erfinder: **Hoppe, Günter
Lothringer Strasse 170
D-4200 Oberhausen (DE)**

Courier Press, Leamington Spa, England.

## Beschreibung

Die Erfindung betrifft ein Verfahren zum Herstellen eines einteiligen Ventilgehäuses mit zwei gleichachsigen Stutzen, bei dem das Gehäuse im Gesenk geschmiedet wird, die Kanäle beider Stutzen gebohrt werden und der Kanal des Auslaufstutzens durch einen geneigt zu ihm verlaufenden gebohrten Kanal mit der senkrecht zur gemeinsamen Achse der Stutzen verlaufenden Ventilbohrung verbunden wird.

Derartige Ventilgehäuse werden für Absperr- und Rückschlagventile eingesetzt. Bei einem bekannten Verfahren (DE—B— 1 042 998) der oben genannten Art wird von einem Schmiederohling ausgegangen, der die äußere Form des späteren Ventilgehäuses aufweist. In diesen Rohling wird zur Bildung des geneigt verlaufenden Kanals vom Gehäusedeckelflansch her ein Dorn eingedrückt. Anschließend wird der Rohling im Bereich der gleichachsigen Stutzen aufgebohrt. Zur Erzielung eines ausreichend großen Durchflußquerschnittes erhält der geneigt verlaufende Kanal durch das Dornen eine ovale Querschnittsform. Ein so ausgebildetes Ventilgehäuse weist auf der Austrittsseite einen Durchgang mit einem geknickten Verlauf auf, der zusammen mit dem Übergang von der runden in die ovale und von der ovalen in die runde Querschnittsform ein ungünstiges Strömungsverhalten zeigt. Da darüber hinaus der Dorn vom Deckelflansch des Gehäuses her angesetzt werden muß, ist das bekannte Verfahren auf die Herstellung von verhältnismäßig niedrigen Ventilgehäusen beschränkt.

Nach der DE—B—1 042 998 könnte der geneigt verlaufende Kanal auch gebohrt werden. Jedoch hätte das Bohren, wenn von dem vorgegebenen Schmiederohling ausgegangen wird, den Nachteil, daß der Kanal nur einen verhältnismäßig kleinen Querschnitt erhalten kann, wenn man zwecks Vermeidung komplizierter Nachbearbeitungen eine Verletzung der Stirnseite der Deckeldichtleiste vermeiden will.

Der Erfindung liegt die Aufgabe zugrunde, das bekannte Verfahren zum Herstellen von Ventilgehäusen mit zwei gleichachsigen Stutzen und einer senkrecht dazu verlaufenden Ventilbohrung so weiterzuentwickeln, daß mit ihm Ventile mit verringertem Durchflußwiderstand und frei wählbarer Höhe hergestellt werden können.

Diese Aufgabe wird dadurch gelöst, daß zunächst ein Gehäuse-Rohling geschmiedet wird, dessen Auslaufstutzen unter einem solchen Winkel zur späteren Ventilbohrung verläuft, daß er von seiner Stirnseite her bis zur späteren Ventilbohrung durchbohrt werden kann, daß dieser Stutzen dann mit einer Schmiedewalze in seine endgültige Lage gebogen und der Rohling in einem kalibrierten Gesenk fertiggeschmiedet wird und daß anschließend der gebohrte Kanal des Einlaufstutzens und die Ventilbohrung hergestellt werden.

Aus der AT—B—145 719 ist es zwar beim Warmpressen von Ventilgehäusen, die einen geraden Anschlußstutzen und einen gebogenen Auslaufstutzen aufweisen, bekannt, den Auslaufstutzen zunächst schräg an einen Rohling anzuformen, dann aufzubohren und schließlich den gebohrten Auslaufstutzen in die endgültige Form zu biegen. Hiermit wird jedoch bezweckt, auch den gebogenen Kanal des Auslaufstutzens durch Bohren in den warmgepreßten Gehäusekörper einzuarbeiten.

Bei dem Verfahren nach der Erfindung wird der Kanal, der den Auslaßstutzen mit der Ventilbohrung verbindet, von der Seite des späteren Auslaßstutzens her aufgebracht, so daß die Höhe des Ventilgehäuses für diesen Vorgang keine Beschränkung darstellt. Das Ventilgehäuse erhält durch den Schmiedevorgang an den gleichachsigen Stutzen zylindrische Endstücke, die für eine einwandfreie Prüfung der Schweißnaht zwischen Stutzen und Rohrleitung notwendig sind. Dabei bleiben die mit dem Schmiedeverfahren verbundenen Vorteile für das Gehäuse erhalten. Zugleich wird durch die gekrümmt ausgeführte Durchgangsbohrung der Durchflußwiderstand im Ventil verringert.

Ein Ausführungsbeispiel der Erfindung ist in der Zeichnung dargestellt und wird im folgenden näher erläutert. Es zeigt

Fig. 1 eine Schmiederohling zur Herstellung eines Gehäuses gemäß der Erfindung und

Fig. 2 den Längsschnitt durch ein Ventil mit einem Gehäuse gemäß der Erfindung.

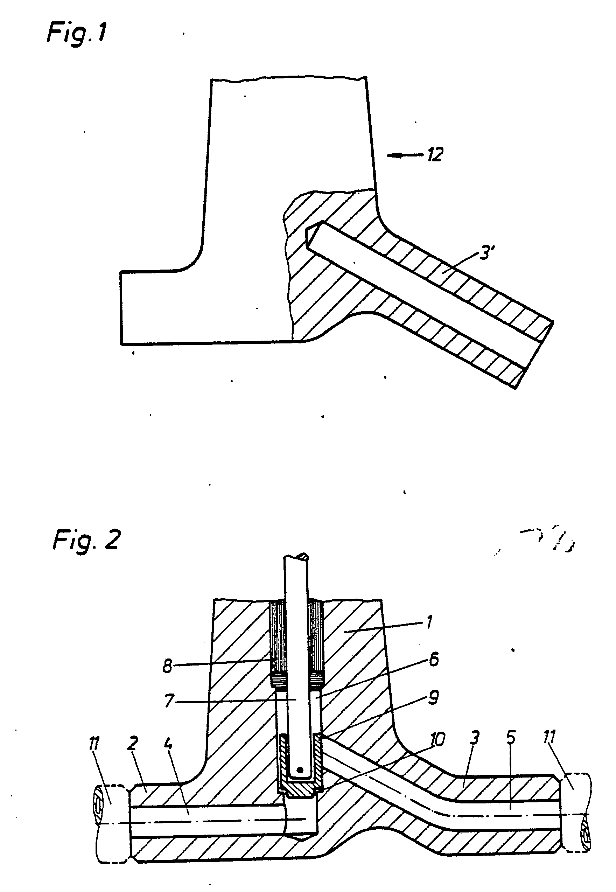

Das in Fig. 2 dargestellte Ventil ist ein Absperrventil. Die Erfindung läßt sich aber ebensogut auch für Rückschlagventile einsetzen.

Das Gehäuse 1 des Absperrventils weist seitlich zwei Stutzen 2 und 3 auf, die jeweils mit einer Durchgangsbohrung 4 bzw. 5 versehen sind. Die Durchgangsbohrungen 4 und 5 münden in eine Ventilbohrung 6 ein, die in der Ventillängsachse verläuft. In der Ventilbohrung 6 ist eine Ventilspindel 7 längs verschiebbar angeordnet und durch eine Stopfbuchse 8 abgedichtet. Die Ventilspindel 7 ist an ihrem unteren Ende mit einem Ventilkegel 9 versehen, der mit einem Ventilsitz 10 zusammenwirkt.

Die beiden Stutzen 2 und 3 weisen zylindrische Endstücke auf, die in eine Rohrleitung 11 eingeschweißt sind. Bei einer späteren Überprüfung der Schweißnaht mit Hilfe von Ultraschall oder Röntgenstrahlung wird der Prüfkopf über das Endstück der Rohrleitung 11 und das zylindrische Endstück der Stutzen 2 und 3 geführt.

Die auf der Ventileingangsseite vorhandene Durchgangsbohrung 4 verläuft gradlinig in Richtung der Achse der Rohrleitung 11 und somit rechtwinkelig zur Ventilbohrung 6. Die Mittelachse der Durchgangsbohrung 5 auf der Ventilaustrittsseite ist gekrümmt und läuft in die Achse der Rohrleitung 11 ein.

Das Gehäuse 1 wird durch Schmieden hergestellt. Dazu wird in einem Gesenk ein Rohling 12 geschmiedet, dessen äußere Umrisse imwesentlichen dem des fertigen Gehäuses 1 entsprechen. Nach Figur 1 weist dieser Rohling 12 einen Stutzen 3' auf, der unter einem Winkel zur späteren Ventillängsachse verläuft. Der Stutzen 3' wird anschließend mit einer gradlinig verlaufenden Bohrung versehen. Der abgewinkelte und durchbohrte Stutzen 3' wird mit einer kalibrierten Schmiedewalze und einem entsprechenden Gegenstück so weit gebogen, daß das Ende des Stutzens 3' in die gleiche Achse zu liegen kommt wie der Stutzen 2 auf der anderen Seite des Rohlings 12. Der so vorbereitete Rohling 12 wird im Gesenk auf die endgültige Form des Gehäuses 1 gebracht. Anschließend werden die Durchgangsbohrung 4 und die Ventilbohrung 6 ausgeführt.

## Patentanspruch

Verfahren zum Herstellen eines einteiligen Ventilgehäuses mit zwei gleichachsigen Stutzen (2 und 3), bei dem das Gehäuse im Gesenk geschmiedet wird, die Kanäle (4 bzw. 5) beider Stutzen gebohrt werden und der Kanal (5) des Auslaufstutzens (3) durch einen geneigt zu ihm verlaufenden gebohrten Kanal mit der senkrecht zur gemeinsamen Achse der Stutzen verlaufenden Ventilbohrung (6) verbunden wird, dadurch gekennzeichnet, daß zunächst ein Gehäuse-Rohling (12) geschmiedet wird, dessen Auslaufstutzen (3') unter einem solchen Winkel zur späteren Ventilbohrung (6) verläuft, daß er von seiner Stirnseite her bis zur späteren Ventilbohrung durchbohrt werden kann, daß dieser Stutzen dann mit einer Schmiedewalze in seine endgültige Lage gebogen und der Rohling (12) in einem kalibrierten Gesenk fertiggeschmiedet wird und daß anschließend der gebohrte Kanal (4) des Einlaufstutzens (2) und die Ventilbohrung (6) hergestellt werden.

## Revendication

Procédé pour la fabrication d'un corps de soupape en une pièce avec deux tubulures équiaxes (2 et 3), le corps étant estampé, les passages (4 resp. 5) des deux tubulures étant alésés et le passage (5) de la tubulure de sortie (3) étant raccordé à l'alésage de soupape (6), disposé verticalement à l'axe commun des tubulures, par un passage alésé qui est incliné par rapport au passage de la tubulure de sortie, caractérisé par le fait qu'il est forgé d'abord une ébauche de corps (12) dont la tubulure de sortie (3) est disposée par rapport à l'alésage de soupape ultérieur (6) à un angle permettant son alésage à partir de son côté frontal jusqu'à l'alésage de soupape ultérieur et permettant en outre de plier cette tubulure au moyen d'un laminoir de forge pour la mettre dans la position définitive, de finir l'estampage de l'ébauche (12) à l'aide d'une estampe calibrée et d'effectuer finalement l'alésage du passage (4) de la tubulure d'entrée (2) et l'alésage de la soupape (6).

## Claim

Method for the production of a one-piece valve body with two equiaxed nozzles (2 and 3) according to which the body is die forged, the passages (4 and 5) of both nozzles are bored and the passage (5) of the outlet nozzle (3), through a passage bored with inclination towards it, is connected with the valve body (6) which is normal to the joint axis of the nozzles characterized by the fact that first the body blank (12) is forged whose outlet nozzle (3') leads to the later valve bore (6) under such an angle that it can be bored through from the front side to the later valve bore so that this nozzle can then be bent by forging rolls to its final position and the blank (12) is finished forged in a calibrated die and that thereafter the bored passage (4) of the inlet nozzle (2) and the valve bore (6) are produced.

*Fig.1*

*Fig. 2*